# EUROPEAN PATENT APPLICATION

(11) **EP 2 404 742 A1**
(43) Date of publication of application: **11.01.2012**
(21) Application number: 10169069.1
(22) Date of filing: 09.07.2010
(51) Int. Cl.: B29C 70/38, B29C 70/52, F03D 1/06, B29D 99/00, B29C 70/48, B29C 70/54

(54) **Method to manufacture a component of a composite structure**

(71) Applicant: Siemens Aktiengesellschaft, 80333 München (DE)
(72) Inventor: Grove-Nielsen, Erik, 7870, Roslev (DK)

(57) **Abstract**

The invention relates to a method to manufacture a component of a fibre reinforced structure. A number of unconnected rovings is used to form a roving bundle. A number of roving bundles is positioned automatically into a forming tool. The roving bundles are arranged in a way that at least one layer of the component is assembled. The roving bundles are aligned unidirectional into the forming tool. Each roving bundle is at least wetted with a matrix material before it is positioned into the forming tool.

## Description

The invention relates to a method to manufacture a component of a composite structure.

The invention preferably relates to a method to manufacture a component of a wind-turbine blade.

Composite structures are widely used to build up components for a wind turbine. A sequence of fabrics, which preferably contain woven fibre glass, is normally used for this purpose.

For the manufacturing of a blade or of a component so called "glass fibre reinforced plastics" are used. They usually contain polyester or epoxy resin.

So called "unidirectional glass fabrics" are often used in load bearing parts of the blade or component.

These fabrics contain so called "glass fibre roving", while the glass fibres of the fabrics are aligned parallel to each other.

Even other fabrics are used to build up the blade or the component. One type of fabric is shaped like a weave, while glass fibres or glass-fibres roving are stitched together by yarns. The yarns contain polyester or similar material.

The weave is impregnated with resin later, when the blade or component is manufactured. The resin is infused into the desired structure and thus into the weave by a technical vacuum for example. One common used process is known as "Vacuum Assisted Resin Transfer Moulding, VARTM" process for example.

Due to the fabrication areas or volumes with different amounts of resin are introduced into the manufactured structure. These volumes may be located between adjacent fabrics or even within the fabrics used within the structure.

For a strong blade or component it is very important to obtain an even distribution of glass fibres and resin, without resin rich "pockets" inside the structure.

These pockets especially need to be avoided along the load-bearing areas of the blade or component.

Well known standard fabrication methods use woven fabrics and/or chopped strand mats. This material contributes to the problem of resin-rich pockets addressed above.

Unidirectional fibres, which are close to a primary load bearing area of a blade, should be aligned along the longitudinal direction (zero degree direction) of the blade. Thus the fibres used can not be wound on a filament winding mandrel. Ordinary hand lay up work with expensive woven fabrics has to be used there.

It is the object of the present invention to provide an improved method to manufacture a component of a composite structure, preferably of a wind-turbine blade.

This object is reached by the features of claim 1. Preferred configurations are object of the dependent claims.

According to the invention a component, preferably of a fibre reinforced structure is manufactured.

The component may be part of a wind turbine blade, but it is even possible to produce a whole blade according to the method invented.

According to the invention a number of unconnected roving is used to form a roving bundle. A number of roving bundle is positioned automatically into a forming tool. The roving bundles are arranged in a way that at least one layer of the component is assembled. The roving bundles are aligned unidirectional into the forming tool. Each roving bundle is at least wetted with a matrix material (like resin or glue) before it is positioned into the forming tool.

According to the method invented resin-rich pockets within the component are reduced or even avoided. Thus the whole component is enforced in view to mechanical loads, which might act on the component.

The stiffness of the component and of the structure, which contains the component, is increased. Thus the quality of the component is increased.

Preferably a complete wind turbine blade is manufactured by the method invented.

Preferably glass-fibre is used, which may be supplied as roving yarn.

The roving yarn is preferably provided or carried by a bobbin.

Each roving yarn comprises a plurality of 1000 to 3000 single fibres for example.

The wetting or the impregnation is preferably done in an ongoing process. Preferably a robot device is used to place the wetted bundles onto or into the forming tool.

Due to the wetting / impregnation a higher glass percentage of the final laminate is achieved.

The whole component is more homogeneous thus resin rich areas are avoided or even eliminated.

Adhesion forces and a surface tension help to achieve the parallel orientation of the roving in the forming tool. Thus the handling of the individual roving bundles is easier.

The invention ensures that an even distribution of fibres within the layer and with the highest possible glass percentage is obtained, without impairing the fatigue properties of the structure.
Thus it is possible to manufacture a central load bearing spar of a wind turbine.

The matrix material (like resin or glue) is not cured before all material is placed on the forming tool (a mandrel for example).
Preferably a heat curing epoxy, which is similar to the resin, is used for this purpose.

Preferably a polyester or an epoxy resin with an added inhibitor is used, which delays the curing cycle.

The wetting / impregnation is preferably done by help of a wetting system. The bundles of glass fibres are wet in a resin bath and are preferably pulled through a nozzle of the wetting system.

After leaving the nozzle the fibres are unidirectional. Adhesion forces and surface tension help the fibre bundles to maintain a parallel and aligned orientation of the individual fibres.

Preferably a layer of the component is built up without woven fabrics. Resin rich pockets due to cross-stitching and tightening of the glass fibre bundles are avoided.

The nature of the woven fabric combined with the tedious manual lay-up work is normally the reason for the formation of wrinkles in the structure. The present invention avoids the use of woven fabrics, thus he formation of wrinkles in the layer is avoided.

The use of roving bundles instead of pre-fabricated fibre mats also reduces the material cost of the component.
Using glass directly from the roving bobbins removes the cost of weaving of fabrics, and hence reduces the cost of the final product.

The automated lay-up according to the invention may be even combined with the well known traditional lay up work.
For example the most difficult and critical parts of the blade, like the beam, may be laid out automatically while low load layers may be laid out by the traditional and manual lay-up method.

The inventive method also reduces the amount of the hard manual lay up work, where large and heavy fabrics or rolls of fabrics need to be lifted and positioned into the forming tool. Thus the working conditions for the lay-up workers are improved.

Furthermore, the use of a substantially closed wetting system like a resin chamber improves the working condition for the workers, as the volatile substances are kept closed inside the wetting system.

Each bundle of roving is preferably provided by a bobbin. Thus a typical production setup may need an array of 100 up to 200 or more bobbins.

The procedure described now may be used to manufacture a central load bearing spar of a wind turbine blade.

A robot device places impregnated fibre bundles on a mandrel, which may have the shape of a hollow spar.

The fibre bundles are laid from the root end and further outboard, some bundles ending near the tip.

The heaviest loaded part of the spar will have the highest number of fibre bundles. Thus all bundles begin at the blade root, but only few extend to the tip.

Fibres in other directions than 0° in view to the longitudinal axis of the blade may be placed to enhance the torsion stiffness of the blade.
The fibres, which are positioned in these other directions, could also be positioned by machine or robot-device.

A plastic liner may be placed upon the mandrel when all roving bundles are placed. A technical vacuum may be applied underneath the liner.

The resin is now allowed to cure while the blade is assembled / is built up. Heat may be applied later to cure the structure.

An entire blade structure, which uses a spar being built up as described above, may be completed as described now:

All necessary materials for a skin laminate of the wind turbine blade are placed in a closed mould system. The closed mould system contains an upper and a lower mould, which are connected. Thus the blade is enclosed by the closed mould system.

A vacuum liner is applied to the structure, which is needed for the vacuum to be applied.

The cured backbone structure and two supplementary soft mandrels (one in front of the backbone and one behind) are placed in between the two mould parts.

A high technical vacuum is applied and resin is infused in the blade skin area, thus a closed envelope around the back bone structure is achieved.

Preferably each single roving bundle is cut individually and automatically at a predetermined length. By controlling the lengths of the roving bundles an advanced and more precise design and build up of the fibre-layers is achieved.

The machine comprises for example a number of cutting devices, used to cut each roving-bundle individually as described above. The cutting will be done in a predetermined manner to achieve the specific endings of the stacked roving-bundles as described above.

In a first embodiment a dedicated cutting-device is allocated to each single roving-bundle or the cutting-device is allocated to a number of roving-bundles.

For example roving-bundles are running through an eye of the machine, while the cutting device is located nearby the eye.

In a second embodiment the used cutting device is located movable within the machine. Thus only one cutting device is needed for different roving bundles, cutting them at different positions of the machine.

In a further embodiment the roving bundles are laid-out into a forming tool, where the forming tool is arranged as a mould for a wind-turbine blade or as a part of a mould, used for a wind turbine blade production.
At least one layer of fibres is laid out in a longitudinal direction of the mould part. The mould can be either a mould part for the suction side or for the pressure side of a wind-turbine blade.

In a further embodiment a forming tool is arranged for building up a part of a wind-turbine blade, where a carrier is positioned at the bottom of the forming tool.at least one layer of unconnected unidirectional roving-bundles of a fibre-material is laid-out on top of the carrier. The carrier is used to lift the part by vacuum lifting or the like.

As described above the roving-bundles are preferably supplied by bobbins, which are preferably located in a stationary fixture or which are attached to a machine.
The machine is arranged to move forward and backward along a longitudinal axis of the component to build up the stacked roving-bundles in layers.

The invention is not limited to glass fibre roving as carbon fibres, natural fibres and the like may be used as well.

The invention is described in more detail by help of a drawing.
FIG 1 shows the method invented,
FIG 2 shows the manufacturing of another wind turbine blade using the method invented, and
FIG 3 shows the manufacturing of another wind turbine blade using the method invented.

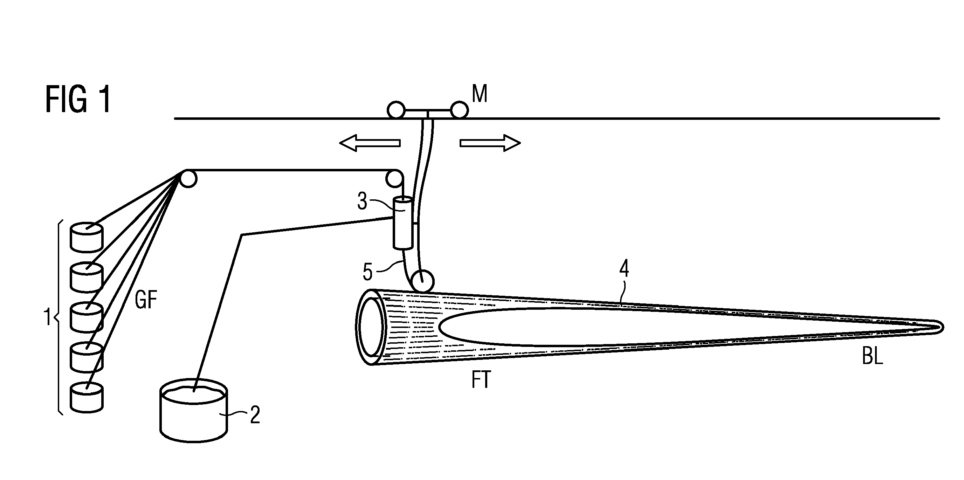

FIG 1 shows the method invented. A wind turbine blade BL is manufactured in this case the main structural spar.

A number of bobbins 1 are shown. Each bobbin 1 supports and supplies a roving bundle GF to a wetting apparatus 3.

The wetting apparatus 3 contains a nozzle (not shown in detail), where the roving bundles GF of the bobbins 1 are pulled through.

The roving bundles GF are impregnated with a resin 2 while the roving bundles GF are pulled through the wetting apparatus 3.

The resin 2 is supplied to the wetting apparatus 3 from a resin tank.

The roving bundles GF, which are now impregnated with resin, form an impregnated roving bundle 5 when they leave the wetting apparatus 3. Within this impregnated roving bundle 5 all roving are aligned unidirectional.

The impregnated roving bundles 5 are laid into a forming tool FT to build up the three-dimensional shape of the blade BL, or a blade part.

The forming tool FT may be constructed and designed as lower mould, which might be used within a VARTM-process for example.

Preferably the wetting apparatus 3 is attached to a machine M. The machine M moves forward and backward along a longitudinal axis of the blade BL to build up a number of stacked roving-bundles in layers.

Preferably the bobbins 1 are attached to the machine M.

It is also possible to lay-down a number of impregnated roving bundles 5 onto a mandrel 4, which is used to build up the blade-structure and which is filled with air under pressure for example.

It has to be noted that resin 2 (or another matrix material) is not cured before all material is placed on the mandrel 4.

Preferably this is achieved by the usage of a heat curing epoxy as matrix material.

It is also possible to use so called "Prepreg"-components or other pre-impregnated fabrics or rovings.

Preferably a polyester-resin or an epoxy-resin with an added inhibitor is used while the inhibitor delays the curing cycle.

Preferably a vacuum tight liner is packed around the mandrel 4, while vacuum is applied. The mandrel 4 is heated to start and complete the curing of the resin.

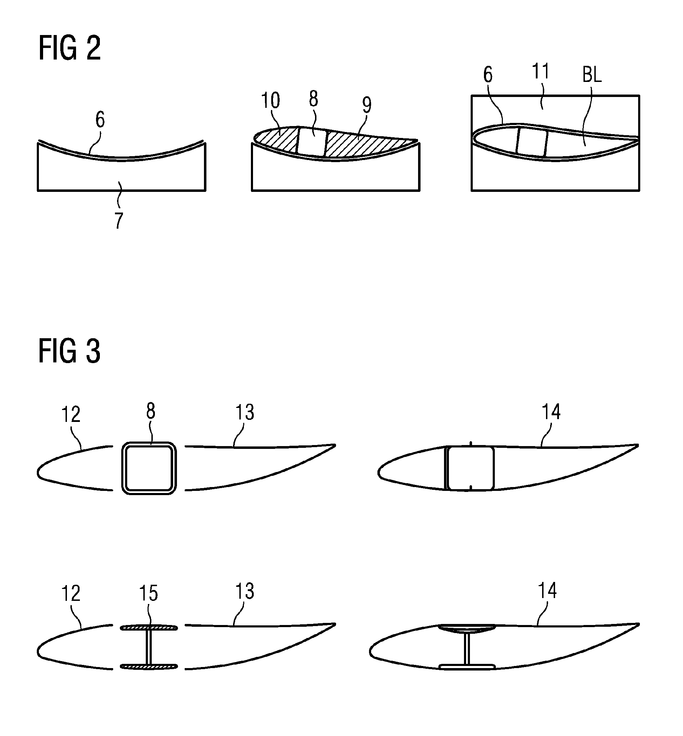

FIG 2 shows the manufacturing of another wind turbine blade BL using the method invented.

A number of dry fabrics or pre-impregnated fabrics 6 are placed on a lower mould 7.

An O-shaped backbone beam 8 manufactured by the inventive method is placed on the lower mould 7, a rear mandrel 9 and a front mandrel 10 are also placed on the lower mould 7.

Finally another layer of dry fabrics or pre-impregnated fabrics 6 are placed on top of the structure.

The lower mould 7 is connected with an upper mould 11 to build up a closed-mould system.

Finally the structure is infused with resin using a "vacuum assisted resin transfer mould, VARTM" process.

FIG 3A shows the manufacturing of a wind turbine blade using an o-shaped backbone beam is manufactured using the method invented.

A leading edge shell 12, a trailing edge shell 13 and an O-shaped backbone beam 8. The leading- and trailing-edge parts 12, 13 are produced in separate moulds, and glued on to the backbone beam 8.

FIG 3B shows the manufacturing of another wind turbine blade similar to the blade shown in FIG 3A but with an I-shaped backbone beam 15 instead.

Referring to FIG 2 and to FIG 3 the single components 8, 12, 13 and 15 may be produced according to the method invented using individual roving bundles. However, the leading edge and the trailing edge are not load critical and can be manufactured using the normal lay-up work in separate moulds.

## Claims

1. Method to manufacture a component of a fibre reinforced structure,
- where a number of unconnected roving is used to form a roving bundle,
- where a number of roving bundle is positioned automatically into a forming tool, while the roving bundles are arranged in a way that at least one layer of the component is assembled,
- where the roving bundles are aligned unidirectional into the forming tool,
- where each roving bundle is at least wetted with a matrix material, before it is positioned into the forming tool.

2. Method according to claim 1, where each roving bundle is impregnated or saturated with the matrix material.

3. Method according to claim 1 or claim 2, where each roving bundle is pulled through a wetting system, which is designed and arranged in a way that the roving bundle is at least wetted by the matrix material.

4. Method according to claim 3, where each roving bundle is pulled through a nozzle of the wetting system, which is designed and arranged in a way that the roving bundle is at least wetted and/or that the roving bundle is aligned into the forming tool.

5. Method according to claim 1, where each roving bundle is provided from a bobbin.

6. Method according to claim 3 or to claim 5,
- where the wetting system and/or the bobbin interacts with a machine,
- where the machine moves forward and backward along a longitudinal axis of the component or of the forming tool to build up a number of stacked roving-bundles in layers.

7. Method according to claim 1, where a mould or a lay-up table or a bench or a mandrel is used as forming tool.

8. Method according to claim 7, where the mould is used to manufacture the component by help of a "Vacuum Assisted Resin Transfer Mould, VARTM" process.

9. Method according to claim 1, where each roving bundle is pulled through a closed chamber, which contains the matrix material.

10. Method according to claim 1, where glass fibres, carbon fibres or natural fibres are used to form the roving bundle.

11. Method according to one of the claims 1 to 10, where each roving bundle is cut individually and/or automatically at a predetermined length when it is positioned into the forming tool.

12. Method according to one of the claims 1 to 11, where resin or glue is used as matrix material.

13. Blade for a wind turbine, where at least one layer of the blade is manufactured according to the method claimed in one of the claims 1 to 12.

14. Backbone for a wind turbine blade, where at least one layer of the backbone is manufactured according to the method claimed in one of the claims 1 to 12.
